# EUROPÄISCHE PATENTSCHRIFT

(11) **EP 1 270 325 B1**
(45) Veröffentlichungstag und Bekanntmachung des Hinweises auf die Patenterteilung: **29.08.2007**
(21) Anmeldenummer: 02013374.0
(22) Anmeldetag: 19.06.2002
(51) Int. Cl.: B60Q 1/08

(54) **Scheinwerfer für Fahrzeuge**
Headlamp for vehicle
Phare de véhicule

(30) Priorität: 26.06.2001 DE 10130809
(43) Veröffentlichungstag der Anmeldung: 02.01.2003
(73) Patentinhaber: Hella KGaA Hueck & Co., 59552 Lippstadt (DE)
(72) Erfinder: Trowitzsch, Christian, 28357 Bremen (DE)

(56) Entgegenhaltungen:
- EP-A- 0 858 931
- WO-A-00/69000
- WO-A-01/01038
- WO-A-98/54030
- DE-A1- 19 727 701
- FR-A- 2 730 035
- FR-A- 2 797 678
- US-A- 5 633 710

## Beschreibung

Die Erfindung betrifft einen Scheinwerfer für Fahrzeuge nach dem Oberbegriff des Patentanspruchs 1.

Nach der DE 197 37 653 A1 ist ein Scheinwerfer für Fahrzeuge bekannt, der eine konventionell als Gasentladungslampe ausgebildete Lichtquelle enthält. Dieser Lichtquelle ist ein Reflektor bestehend aus einer Mehrzahl von elektronisch ansteuerbaren Mikrospiegeln zugeordnet, so dass durch die Winkelstellung der einzelnen Mikrospiegel jeweils zu den jeweils von denselben erfassten Teilbereichen des von der Lichtquelle ausgesandten Lichtbündels eine vorgegebene Lichtverteilung einstellbar ist.

Aus der WO 0101038 A1 ist ein Scheinwerfer für Fahrzeuge mit einer Mehrzahl von lichtemittierenden Abstrahlelementen bekannt, die zur Bildung einer Lichtquelle auf einem gemeinsamen Träger angeordnet sind. Die lichtemittierenden Abstrahlelemente sind einzeln oder gruppenweise ansteuerbar, so dass eine gewünschte Lichtverteilung erzeugt werden kann. Durch An- und Abschalten von lichtemittierenden Abstrahlelementen kann somit eine breitere oder schmalere Lichtverteilung, respektive die Form der Lichtverteilung, sowie die Intensitätsverteilung des so gebildeten Lichtbündels, beispielsweise Erzeugung eines relativ intensitätsstarken zentralen Bereiches eines so gebildeten Lichtbündels, beeinflusst werden. Bei dem bekannten Scheinwerfer beschränkt sich die Einstellung der Lichtverteilung somit auf die Ansteuerung der einzelnen lichtemittierenden Abstrahlelemente, die entweder ein- oder ausgeschaltet oder entsprechend einem vorgegebenen Lichtstrom eingeschaltet werden können. Zusätzliche Maßnahmen zur Führung des Lichtbündels sind nicht vorgesehen.

Aus der WO 98154030 A ist ein Scheinwerfer für Fahrzeuge mit einer Lichtquelle enthaltend Licht emittierende Abstrahlelemente sowie nicht sichtbares Licht emittierende Elemente auf. Das von dem Licht emittierenden Abstrahlelementen abgestrahlte Licht wird über Lichtführungsmittel, wie beispielsweise einer Linse, nach außen abgestrahlt. Die nicht sichtbares Licht emittierenden Elemente ermöglichen das Detektieren von Licht aus bestimmten Richtungen und bewirken ein in einer Auswerteeinheit verarbeitbares Steuersignal, mittels dessen die Licht emittierenden Abstrahlelemente derart angesteuert werden, dass eine vorgegebene Lichtverteilung erzeugt wird. Die Licht emittierenden Abstrahlelemente und die nicht sichtbares Licht emittierenden Elemente können auf einem gemeinsamen Träger angeordnet sein. Hierbei sind sie von einer gemeinsamen Seite des Trägers in die Umgebung ausgerichtet.

Aufgabe der vorliegenden Erfindung ist es, einen Scheinwerfer für Fahrzeuge derart weiterzubilden, dass er zum einen eine kompakte und flache Bauform aufweist und zum anderen die Funktionalität erweitert wird.

Zur Lösung dieser Aufgabe weist die Erfindung die Merkmale des Patentanspruchs 1 auf.

Der besondere Vorteil der Erfindung besteht darin, dass platzsparend auf dem gemeinsamen Träger der lichtemittierenden Abstrahlelemente zusätzlich nicht sichtbares Licht emittierende Elemente angeordnet sind, die nicht zur Erzeugung der Lichtverteilung beitragen. Die nicht sichtbares Licht emittierenden Elemente können beispielsweise als Sensoren oder Detektoren ausgebildet sein, die ein elektromagnetisches Signal empfangen bzw. aussenden und somit eine Grundlage bilden, um in einer Auswerteeinheit des Fahrzeuges ein Stellsignal zu erzeugen, das auf ein Bauteil des Fahrzeuges einwirkt. Dieses Bauteil kann Bestandteil des Scheinwerfers sein, wie beispielsweise der Träger oder ein Reflektor, mittels dessen die Lichtverteilung veränderbar ist. Grundgedanke der Erfindung ist es, zum einen ein oder mehrere nicht sichtbares Licht emittierende Elemente auf dem mit den lichtemittierenden Abstrahlelementen versehenen Träger zu integrieren und zum anderen in Abhängigkeit von den in Beziehung zu dem nichtlichttechnischen Element stehenden Signal eine mechanische Ansteuerung eines Bauteils des Scheinwerfers zu bewirken. Vorteilhaft sind die lichtemittierenden Abstrahlelemente und die nicht sichtbares Licht emittierenden Elemente in einer gemeinsamen elektronischen Baueinheit angebracht, so dass die Herstellung und Konfektionierung des Scheinwerfer wesentlich vereinfacht werden kann. Erfindungsgemäß ist auf einer dem Lichtaustritt des Scheinwerfers abgewandten Seite des Trägers im Abstand zu demselben ein Reflektor angeordnet, der zur Lichtführung des von dem lichtemittierenden Abstrahlelementen erzeugten Lichtbündels dient. Die lichtemittierenden Abstrahlelemente sind auf einer dem Reflektor zugewandten Seite des Trägers angeordnet. Die nichtsichtbar lichtemittierenden Abstrahlelemente sind auf einer dem Reflektor abgewandten und dem Lichtaustritt des Scheinwerfers zugewandten Seite des Trägers angeordnet. Auf diese Weise kann die Fläche des Trägers vollständig zur Aufnahme der Abstrahlelemente genutzt werden.

Nach einer besonderen Ausführungsform der Erfindung ist das nicht sichtbares Licht emittierende Element als ein nicht sichtbares Licht emittierendes Abstrahlelement, vorzugsweise als ein eine Laserstrahlung emittierendes Abstrahlelement, ausgebildet, mittels dessen ein Stellsignal für eine statische oder dynamische Leuchtweiteregelung erzeugbar ist.

Nach einer Weiterbildung der Erfindung sind die nicht sichtbares Licht emittierenden Lichtabstrahlelemente gitterförmig zusammen mit den lichttechnischen Abstrahlelementen auf dem Träger angeordnet, wobei vorzugsweise im Zentrum des Trägers die lichtemittierenden Abstrahlelemente und in einem Außenbereich des Trägers die nicht sichtbares Licht emittierenden Abstrahlelemente angeordnet sind.

Nach einer Weiterbildung der Erfindung sind die nicht sichtbares Licht emittierenden Elemente und die lichtemittierenden Abstrahlelemente mittels einer gemeinsamen Steuereinheit ansteuerbar, die in der Nähe des Trägers angeordnet ist. Somit kann die Ansteuerung für die auf dem Träger befindlichen Elemente platzsparend in einer gemeinsamen Baueinheit, die vorzugsweise im oder am Scheinwerfer angeordnet ist, erfolgen. Die Steuereinheit kann unmittelbar auf einer Rückseite des Trägers angeordnet sein oder in einem Abstand zu demselben auf einer der Lichtabstrahlrichtung abgewandten Seite eines Lichtführungsmittels, vorzugsweise eines Reflektors.

Nach einer Weiterbildung der Erfindung ist im Bereich einer Mittelebene des Trägers und/oder des Reflektors ein Haltesteg angeordnet, der zur Halterung des Trägers dient. Der Haltesteg befindet sich somit in einem Bereich des Trägers bzw. Reflektors, in dem die von ihm ausgehende lichttechnisch ungünstigste Wirkung am geringsten ist. Vorzugsweise ist dem Haltesteg eine elektrische Zuführleitung zugeordnet, zur elektrischen Ansteuerung und Versorgung der auf dem Träger befindlichen Abstrahlelemente.

Nach einer Weiterbildung der Erfindung sind den einzelnen lichtemittierenden Abstrahlelementen eine mikromechanische Verstelleinrichtung zugeordnet, mittels derer eine Verstellung der einzelnen Abstrahlelemente in einem vorgegebenen Winkelbereich ermöglicht wird. Auf diese Weise lässt sich beispielsweise eine Kurvenlichtfunktion erzeugen. Alternativ können einzelne oder zu eine Segment zusammengefasste Abstrahlelemente zum Ausgleich von ausgefallenen Abstrahlelement verstellt werden zur Aufrechterhaltung der vorgegebenen Lichtverteilung.

Nach einer Weiterbildung der Erfindung ist der Reflektor zu einer in Horizontalrichtung verlaufenden Längsachse des Trägers schwenkbar ausgebildet, so dass durch Kippen oder Verschwenken des Reflektors eine Verstellung der Lichtfunktion zwischen Fernlicht und Abblendlicht ermöglicht wird.
Nach einer Weiterbildung der Erfindung ist der Träger zylinderförmig ausgebildet und um eine Längsachse desselben schwenkbar gelagert, so dass durch Drehen des Zylinders eine Verstellung der Lichtverteilung ermöglicht wird.

Nach einer Weiterbildung der Erfindung ist der Träger zylinderförmig ausgebildet und um eine Längsachse desselben schwenkbar gelagert, so dass durch Drehen des Zylinders eine Verstellung der Lichtverteilung ermöglicht wird.

Nach einer Weiterbildung der Erfindung sind in dem zylindrischen Träger mindestens ein Wärmübertrager zur Ableitung der durch die Abstrahlelemente Wärme integriert. Vorzugsweise ist im Bereich des Trägers ein Eingangswärmeübertrager zur Wärmeaufnahme angeordnet, der über ein Wärmetransportmedium mit einem Ausgangswärmeübertrager gekoppelt ist, der sich in einem von dem Träger entfernten Bereich befindet. Im Bereich des Ausgangswärmeübertragers kann die Wärme an die Umgebung oder an das wärmeleitende Mittel (Flüssigkeit) abgegeben werden. Der Ausgangswärmeübertrager befindet sich vorzugsweise in einem karosserieaußenhautentferten Bereich.

Ausführungsbeispiele der Erfindung werden nachfolgend anhand der Zeichnungen näher erläutert.

Es zeigen:
- Figur 1: ein Blockschaltbild eines Scheinwerfers für Fahrzeuge und mit ihm gekoppelte Bauteile,
- Figur 2: eine Draufsicht auf eine Matrix von Abstrahlelementen, die auf einem gemeinsamen Träger angeordnet sind,
- Figur 3: eine schematische Seitenansicht eines Teils eines Scheinwerfers mit einem gewölbten Träger und
- Figur 4: eine perspektivische Ansicht eines Teilbereich eines Scheinwerfers mit einem zylindrischen Träger.

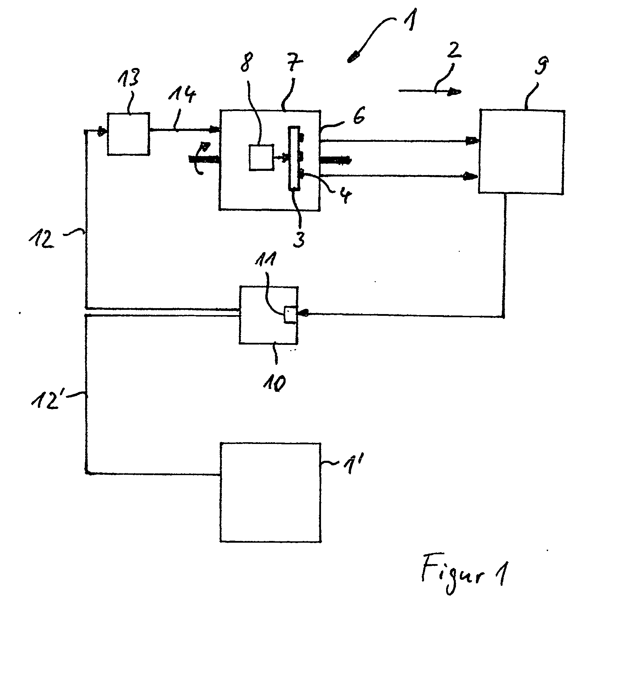

Figur 1 zeigt schematisch einen Scheinwerfer 1, der einen senkrecht zu einer Lichtaustrittsrichtung 2 angeordneten Träger 3 aufweist. Der Träger 3 bildet ein Substrat für eine Mehrzahl von matrixartig angeordneten lichtemittierenden Elementen 4, die auf einer einer transparenten Abdeckseite 6 eines Gehäuses 7 zugewandten Seite des Trägers 3 angeordnet sind.

Wie aus Figur 2 ersichtlich ist, bilden die lichtemittierenden Elemente 4, die vorzugsweise als lichtemittierenden Dioden (LED) ausgebildet sind, die Mehrzahl der auf dem Träger 3 angeordneten elektronischen Bauelemente. Zur Erzielung einer gewünschten Lichtverteilung, beispielsweise Abblendlicht oder Fernlicht, werden die entsprechenden lichtemittierenden Abstrahlelemente 4 mittels einer im Gehäuse 7 des Scheinwerfers 1 angeordneten Steuereinheit 8 angesteuert. Beispielsweise kann ein oberes Segment 4' der Abstrahlelemente 4 um einen Differenzwinkel bezüglich einer Horizontallinie versetzt nach oben im Vergleich zu einem unteren Segment 4" angeordnet sein, so dass bei Ansteuerung des oberen Segmentes 4' eine Fernlichtfunktion zuschaltbar ist.

Jedes lichtemittierenden Abstrahlelement 4 hat somit eine festgelegte Winkelposition relativ zu dem Träger 3, so dass vorgegebene Lichtverteilungen, wie beispielsweise Stadtlicht, Kurvenlicht, Abblendlicht etc. ansteuerbar sind.

Nach einer alternativen Ausführungsform können die lichtemittierenden Abstrahlelemente 4 in einer Ausgangsposition die gleiche räumliche Lage in Bezug auf den Träger 3 aufweisen. Jedem Abstrahlelement 4 ist eine nicht dargestellte mikromechanische Verstelleinrichtung zugeordnet, die durch die Steuereinheit 8 ansteuerbar ist und mittels derer in einem vorgegebenen Winkelbereich eine Verstellung der lichtemittierenden Abstrahlelement 4 in Bezug auf den Träger 3 ermöglicht wird. Auf diese Weise kann entsprechend eines Lichtfunktionsprogrammes, das in dem Fahrzeug implementiert ist, jedes Abstrahlelement 4 zur Erzeugung einer vorgegebenen Lichtverteilung beitragen. Vorteilhaft kann hierdurch die Variabilität erhöht werden, da bei Ausfall von lichtemittierenden Abstrahlelementen 4' andere Abstrahlelemente 4" die Funktion übernehmen können.

In einem Außenbereich des Trägers 3 sind eine geringe Anzahl von nicht sichtbares Licht emittierenden Elementen 5 angeordnet, die beispielsweise als Detektoren, Sensoren etc. ausgebildet sein können. Im vorliegenden Ausführungsbeispiel sind die nicht sichtbares Licht emittierenden Elemente 5 als im Infrarotbereich abstrahlende Laserdioden ausgebildet, die die Laserstrahlung - wie die lichtemittierenden Elemente - in Lichtaustrittsrichtung 2 abstrahlen und an eine Fahrzeugumgebung 9 abgeben. Im Scheinwerferbereich oder an einer weiteren in Fahrtrichtung orientierten Stelle des Fahrzeuges kann eine Auswerteeinheit 10 angeordnet sein, die mittels Detektoren 11 die Lage des Fahrzeuges im Verhältnis zum Bodenbelag repräsentierende Signale aufnimmt, dann verarbeitet, auswertet und ein elektrisches Steuersignal 12 erzeugt, das an eine Stelleinheit 13 abgegeben wird zur Erzeugung eines auf ein Scheinwerferbauteil wirkendes Stellsignals 14. Das Stellsignal 14 wirkt vorzugsweise auf das Gehäuse 7 des Scheinwerfers 1 und bewirkt in Abhängigkeit von der Lage des Fahrzeuges eine dynamische Leuchtweiteregelung desselben. Alternativ kann auch der Träger 3 um eine Horizontalachse verstellt werden, um in Abhängigkeit von den Fahrzeugumgebungsbedinungen stets eine vorgegebene Leuchtweite zu gewährleisten.

Alternativ können die in der Auswerteeinheit 10 erzeugten Steuersignale 12' auch anderen Bauteilen 1' des Fahrzeuges zugeführt werden, beispielsweise einer Nachtsichteinrichtung, die mittels der nicht sichtbares Licht emittierenden Elemente 5 erzeugten Signale und nachfolgender Auswertung der reflektierten Signale in der Auswerteeinheit 10 eine Darstellung in einem Display des Cockpits oder der Windschutzscheibe des Fahrzeuges bewirken, so dass der Sichtbereich des Fahrers wesentlich verlängert wird. Der Wellenlängenbereich des durch das nicht sichtbares Licht emittierende Abstrahlelement 5 erzeugten Strahlung beträgt zwischen 780 nm und 1200 nm.

Der Scheinwerfer 1 hat aufgrund der integrierten Anordnung der Abstrahlelemente 4 und 5 auf dem gemeinsamen Träger 3 und der unmittelbar an einer Rückseite des Trägers 3 angeordneten Steuereinheit 8 eine kompakte und platzsparende Bauform.

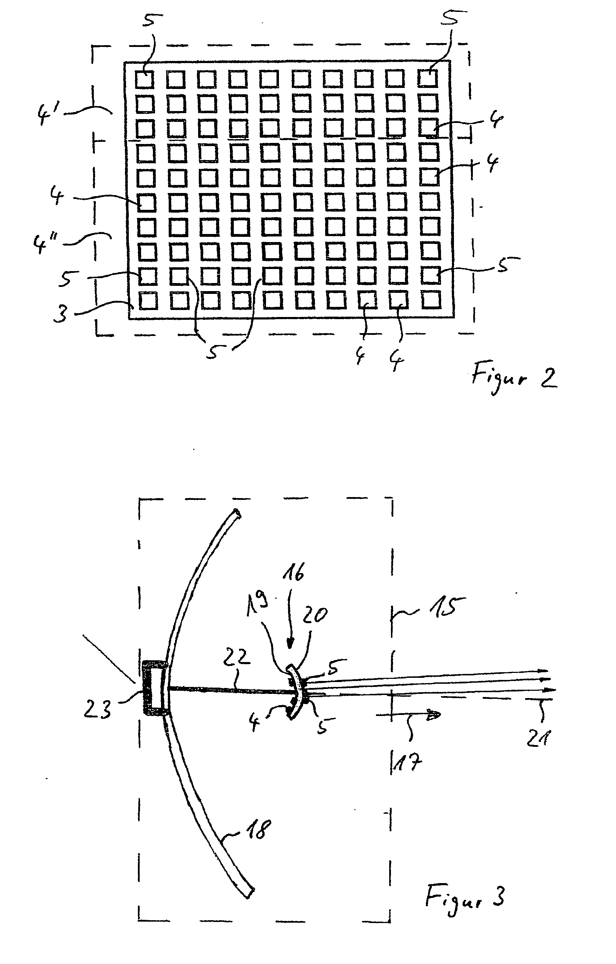

Nach einem weiteren Ausführungsbeispiel eines Scheinwerfers 15 gemäß Figur 3 ist ein Träger 16 bogenförmig ausgebildet, und in Lichtaustrittsrichtung 17 vor einem schalenförmigen Reflektor 18 des Scheinwerfers 15 angeordnet. Auf einer dem Reflektor 18 zugewandten Rückseite 19 des Trägers 16 sind die lichtemittierenden Abstrahlelemente 4 als Leuchtdioden (LED) angeordnet. Die Breite des Trägers 16 ist um das vier- bis zehnfache kleiner als die Breite des Reflektors 18. Die Rückseite 19 des Trägers 16 ist konkavförmig ausgebildet und in einem Abstand zu dem Reflektor 18 angeordnet, der größer ist als die Brennweite desselben. Auf diese Weise wird das von den Leuchtdioden abgesandte Licht an den entsprechenden Segmentflächen des Reflektors 18 reflektiert und in Lichtaustrittsrichtung 17 entsprechend einer vorgegebenen Lichtverteilung abgestrahlt. Die Reflektorflächen sind als Freiflächen-Reflektorelemente ausgebildet, die in Beziehung zu den lichtemittierenden Abstrahlelementen auf der Rückseite 19 des Trägers 16 derart angeordnet sind, dass eine vorgegebene Lichtverteilung erzeugt werden kann.

Auf einer konvexförmigen Vorderseite 20 des Trägers 16 sind nicht sichtbares Licht emittierende Laserdioden 5 angeordnet, die entsprechend dem vorhergehenden Ausführungsbeispiel Laserstrahlung abgeben. In Abhängigkeit von diesen ausgesandten Signalen wird entsprechend dem vorhergehenden Ausführungsbeispiel in der nicht dargestellten Auswertereinheit 10 das Steuersignal 12 generiert Leuchtweite.

Der Träger 16 ist mittels eines entlang einer Mittelebene 21 desselben bzw. des Reflektors 18 verlaufenden Haltestegs 22 an den Reflektor 18 oder einem nicht dargestellten Gehäuse des Scheinwerfers 15 gehaltert. Der Haltesteg 22 ist hohlzylinderförmig ausgebildet und weist eine nicht dargestellte elektrische Zuführleitung zur Ansteuerung bzw. elektrischen Energieversorgung der auf dem Träger 16 angeordneten elektronischen Bauelemente auf. Auf einer Rückseite des Reflektors 18 kann eine Steuereinheit 23 angeordnet sein, mittels derer die auf dem Träger 16 angeordneten Bauelemente 4, 5 ansteuerbar sind.

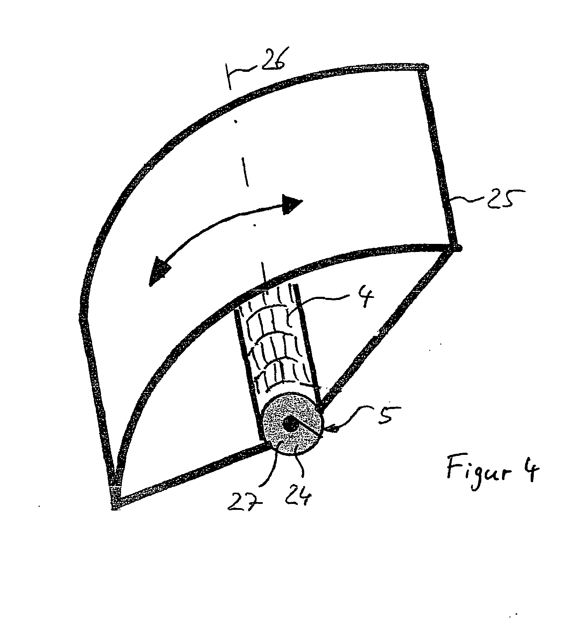

Nach einer weiteren Ausführungsform gemäß Figur 4 ist ein Träger 24 eines Scheinwerfers zylinderförmig ausgebildet. Wie in dem vorhergehenden Ausführungsbeispiel ist der Träger 24 auf einer Rückseite mit Leuchtdioden 4 bestückt, während auf einer Vorderseite Laserstrahlung abgebende Dioden angeordnet sind. Im Unterschied zu dem vorhergehenden Beispiel ist ein Reflektor 25 schwenkbar um eine Längsachse bzw. Horizontalachse 26 des Trägers 24 ausgebildet, so dass in Abhängigkeit von dem in der nicht dargestellten Auswertereinheit erzeugten Steuersignal eine Verstellung des Reflektors 25 zur Einstellung einer vorgegebenen Leuchtweite einstellbar ist. Zusätzlich kann mit dem gesteuerten Verschwenken des Reflektors 25 auch eine Umschaltung zwischen Fern- und Abblendlicht ermöglicht werden.

Alternativ kann der Träger 24 auch schwenkbar um seine Längsachse 26 ausgebildet sein, so dass damit derselbe Effekt erzielt werden kann.

Zur Ableitung der durch die Abstrahlelemente erzeugten Wärme ist in dem Träger 24 ein Wärmeübertrager 27 integriert, der den Innenraum des Trägers 24 vollkommen ausfüllt. Im Bereich der abstrahlenden Elemente ist der Wärmeübertrager 27 als Eingangswärmeübertrager ausgebildet, der eine Verdampferzone enthält, so dass ein Wärmetransportmedium, das dem Eingangswärmeübertrager 27 von einem axial versetzt angeordneten Ausgangswärmeübertrager durch Außenringflächen des Zylinders zugeführt wird, verdampft und dem Ausgangswärmeübertrager über einen zentralen Kanal des Zylinders zurückgeführt wird. In dem Ausgangswärmeübertrager erfolgt eine Kondensation des Dampfes, die Abgabe von Wärme und Rückführung des Dampfes in flüssiger Phase in den Kreislaufprozess. Der Ausgangswärmeübertrager erstreckt sich in einem außerhalb des Scheinwerfers befindlichen Karosseriebereich. Vorteilhaft kann auf diese Weise ein wirksamer Wärmeabtransport ermöglicht werden.

Nach einer alternativen Ausführungsform kann gemäß der Ausführungsform in Figur 1 die Steuereinheit 8 auch auf dem Träger 3 integriert sein. Eine Stromversorgung erfolgt über die Batterie des Fahrzeuges, wobei gleichzeitig die Ansteuersignale an die Steuereinheit 8 übertragen werden.

## Patentansprüche

1. Scheinwerfer für Fahrzeuge mit einer Lichtquelle, die aus einer Mehrzahl von auf einem gemeinsamen Träger (16, 24) angeordneten lichtemittierenden Abstrahlelementen (4) gebildet ist, wobei auf dem gemeinsamen Träger (16, 24) zusätzlich nicht sichtbares Licht emittierende Elemente (5) angeordnet sind zur Erzeugung von Signalen, wobei in Abhängigkeit von den Signalen in einer Auswerteeinheit (10) eine elektronische Verarbeitung und Auswertung erfolgt zur Ausgabe eines von der Fahrzeugumgebung (9) abhängigen elektrischen Steuersignals (12), das einer Stelleinheit (13) zuführbar ist zur Erzeugung eines auf ein Bauteil (8) des Scheinwerfers (1) wirkenden Stellsignals (14), **dadurch gekennzeichnet, dass** ein Reflektor (18, 25) auf einer entgegen der Lichtaustrittsrichtung (17) orientierten Seite des Trägers (16, 24) angeordnet ist und dass der Träger (16, 24) auf einer dem Reflektor (18, 25) zugewandten Rückseite (19) die lichtemittierenden Abstrahlelemente (4) und auf einer dem Reflektor (18, 25) abgewandten Vorderseite (20) die nicht sichtbares Licht emittierenden Elemente (5) aufweist

2. Scheinwerfer nach Anspruch 1, **dadurch gekennzeichnet, dass** die nicht sichtbares Licht emittierenden Elemente als nicht sichtbares Licht emittierende Abstrahlelemente (5) ausgebildet sind.

3. Scheinwerfer nach Anspruch 1 oder 2, **dadurch gekennzeichnet, dass** die nicht sichtbares Licht emittierenden Abstrahlelemente (5) zusammen mit den lichtemittierenden Elementen (4) in einer Matrix angeordnet sind.

4. Scheinwerfer nach einem der Ansprüche 1 bis 3, **dadurch gekennzeichnet, dass** die nicht sichtbares Licht emittierenden Elemente (5) und die lichtemittierenden Elemente (4) mittels einer gemeinsamen Steuereinheit (8) ansteuerbar sind, wobei die Steuereinheit (8) im Bereich des Scheinwerfers (1) angeordnet ist.

5. Scheinwerfer nach einem der Ansprüche 1 bis 4, **dadurch gekennzeichnet, dass** den lichtemittierenden Elementen (4) einzeln oder segmentweise eine mikromechanische Verstelleinrichtung zugeordnet sind, mittels derer eine Relativlage zu dem Träger (3) einstellbar ist.

6. Scheinwerfer nach einem der Ansprüche 1 bis 5, **dadurch gekennzeichnet, dass** der Träger (3) flach oder bogenförmig ausgebildet ist und dass dem Träger (3, 16 ,24) ein mit Freiflächen-Reflektorelementen versehener schalenförmiger Reflektor (18) zugeordnet ist.

7. Scheinwerfer nach Anspruch 6, **dadurch gekennzeichnet, dass** die Länge und/oder Breite des Reflektors (18, 25) ein Mehrfaches der Länge und/oder Breite des Trägers (16, 24) beträgt.

8. Scheinwerfer nach Anspruch 6 oder 7, **dadurch gekennzeichnet, dass** sich zwischen dem Reflektor (18) und dem Träger (16) entlang einer Mittelebene (21) des Trägers (16) und/oder des Reflektors (18) ein Haltesteg (22) erstreckt und dass der Haltesteg (22) eine elektrische Zuführleitung für die Abstrahlelemente (4, 5) aufweist.

9. Scheinwerfer nach einem der Ansprüche 6 bis 8, **dadurch gekennzeichnet, dass** der Träger (16) und der Reflektor (18) auf einer dem Reflektor (18) bzw. dem Träger (16) zugekehrten Seite konkavförmig ausgebildet sind.

10. Scheinwerfer nach einem der Ansprüche 6 bis 9, **dadurch gekennzeichnet, dass** der Reflektor (25) zu einer Längsachse (26) des Trägers (24) schwenkbar ausgebildet ist.

11. Scheinwerfer nach einem der Ansprüche 6 bis 10, **dadurch gekennzeichnet, dass** der Träger (24) zylinderförmig ausgebildet ist und dass der Träger (24) um eine Längsachse (26) desselben schwenkbar gelagert ist.

12. Scheinwerfer nach einem der Ansprüche 6 bis 11, **dadurch gekennzeichnet, dass** in dem zylindrischen Träger (24) mindestens ein Wärmeübertrager (27) integriert ist zur Ableitung der durch die Abstrahlelemente (4, 5) erzeugten Wärme.

## Claims

1. Headlamp for vehicles featuring a light source made up of multiple light-emitting elements (4) mounted on the same carrying element (16, 24) which also holds other elements (5) emitting invisible light for generating signals whose states are electronically processed and analyzed by an analyzer (10) to output an electrical control signal (12) which thus correlates with the environment (9) of the vehicle and can be fed to a control unit (13) to generate an actuation signal (14) which affects a component (8) of the headlamp (1), wherein a reflector (18, 25) resides on the face of the carrying element (16, 24) opposite to the direction of light exit (17) and wherein the light-emitting elements (4) are located on the rear side (19) of the carrying element (16, 24) facing the reflector (18, 25) and the elements (5) emitting invisible light are located on the front side (20) of the carrying element (16, 24) facing away from the reflector (18, 25).

2. Headlamp as in claim 1, wherein the elements emitting invisible light are designed as radiation elements (5) emitting invisible light.

3. Headlamp as in claims 1 or 2, wherein the radiation elements (5) emitting invisible light are arranged on a matrix together with the light-emitting elements (4).

4. Headlamp as in one of claims 1 to 3, wherein the elements (5) emitting invisible light and the light-emitting elements (4) can be actuated by a shared electronic control unit (8) which resides within the area of the headlamp (1).

5. Headlamp as in one of claims 1 to 4, wherein micromechanical means of adjustment are allocated to separate or groups of light-emitting elements (4) which allow the position of the light-emitting elements (4) to be changed in relation to the carrying element (3).

6. Headlamp as in one of claims 1 to 5, wherein the carrying element (3) is designed as a flat or arched body and a dish-shaped reflector (18) of free-form reflector elements is allocated to the carrying element (3, 16, 24).

7. Headlamp as in claim 6, wherein the length and/or width of the reflector (18, 25) is a multiple of the length and/or width of the carrying element (16, 24).

8. Headlamp as in claims 6 or 7, wherein a ridge (22) is located between the reflector (18) and the carrying element (16) along a mid plane (21) of the carrying element (16) and/or the reflector (18) such that the ridge (22) holds an electrical feed line for the radiation elements (4, 5).

9. Headlamp as in one of claims 6 to 8, wherein the carrying element (16) and the reflector (18) are concave on a side facing the reflector (18) or the carrying element (16).

10. Headlamp as in one of claims 6 to 9, wherein the reflector (25) can swivel around a longitudinal axis (26) of the carrying element (24).

11. Headlamp as in one of claims 6 to 10, wherein the carrying element (24) is cylindrical and the carrying element (24) can swivel around a longitudinal axis (26) of the carrying element (24).

12. Headlamp as in one of claims 6 to 11, wherein the cylindrical carrying element (24) features at least one integral heat exchanger (27) for dissipating the heat generated by the radiation elements (4, 5).

## Revendications

1. Projecteur pour véhicules avec une source lumineuse, qui se compose d'une multitude d'éléments de rayonnement électroluminescents (4) disposés sur un support commun (16, 24), des éléments émettant une lumière non visible (5) étant également disposés sur le support commun (16, 24) pour générer des signaux, un traitement électronique et une interprétation ayant lieu dans une unité d'interprétation (10) en fonction des signaux pour sortir un signal de commande électrique (12) dépendant de l'environnement du véhicule (9), lequel signal peut être acheminé à une unité de réglage (13) pour générer un signal de réglage (14) agissant sur un composant (8) du projecteur (1), **caractérisé en ce qu'**un réflecteur (18, 25) est disposé du côté du support (16, 24) tourné à l'opposé du sens de sortie de la lumière (17) et **en ce que** le support (16, 24) les éléments de rayonnement électroluminescents (4) sur une face arrière (19) tournée vers le réflecteur (18, 25) et les éléments émettant une lumière non visible (5) sur une face avant (20) opposée au réflecteur (18, 25).

2. Projecteur selon la revendication 1, **caractérisé en ce que** les éléments émettant une lumière non visible sont conçus comme des éléments de rayonnement émettant une lumière non visible (5).

3. Projecteur selon la revendication 1 ou 2, **caractérisé en ce que** les éléments de rayonnement émettant une lumière non visible (5) sont disposés avec les éléments électroluminescents (4) dans une matrice.

4. Projecteur selon l'une quelconque des revendications 1 à 3, **caractérisé en ce que** les éléments émettant une lumière non visible (5) et les éléments électroluminescents (4) peuvent être commandés par l'intermédiaire d'une unité de commande (8), l'unité de commande (8) étant disposée dans la zone du projecteur (1).

5. Projecteur selon l'une quelconque des revendications 1 à 4, **caractérisé en ce qu'**aux éléments électroluminescents (4) est affecté, individuellement ou segment par segment, un dispositif de réglage micromécanique par l'intermédiaire duquel il est possible de régler une position relative par rapport au support (3).

6. Projecteur selon l'une quelconque des revendications 1 à 5, **caractérisé en ce que** le support (3) est plat ou en forme d'arc et **en ce qu'**au support (3, 16, 24) est affecté un réflecteur (18) en forme de coquille et doté d'éléments réfléchissants à surfaces libres.

7. Projecteur selon la revendication 6, **caractérisé en ce que** la longueur et/ou la largeur du réflecteur (18, 25) s'élève à un multiple de la longueur et/ou de la largeur du support (16, 24).

8. Projecteur selon la revendication 7 ou 8, **caractérisé en ce qu'**une branche de fixation (22) s'étend entre le réflecteur (18) et le support (16) le long d'un plan médian (21) du support (16) et/ou du réflecteur (18) et **en ce que** la branche de retenue (22) présente une conduite d'alimentation électrique pour les éléments de rayonnement (4, 5).

9. Projecteur selon l'une quelconque des revendications 6 à 8, **caractérisé en ce que** le support (16) et le réflecteur (18) sont réalisés en forme concave sur un côté tourné vers le réflecteur (18) ou le support (16).

10. Projecteur selon l'une quelconque des revendications 6 à 9, **caractérisé en ce que** le réflecteur (25) est conçu de manière à pouvoir pivoter par rapport à un axe longitudinal (26) du support (24).

11. Projecteur selon l'une quelconque des revendications 6 à 10, **caractérisé en ce que** le support (24) est réalisé en forme cylindrique et **en ce que** le support (24) est logé de façon à pouvoir pivoter autour d'un axe longitudinal (26) de ce dernier.

12. Projecteur selon l'une quelconque des revendications 6 à 11, **caractérisé en ce qu'**au moins un échangeur thermique (27) destiné à dissiper la chaleur générée par les éléments de rayonnement (4, 5) est intégré dans le support cylindrique (24).
